# EUROPÄISCHE PATENTSCHRIFT

(11) **EP 1 617 980 B1**
(45) Veröffentlichungstag und Bekanntmachung des Hinweises auf die Patenterteilung: **24.01.2007**
(21) Anmeldenummer: 04726964.2
(22) Anmeldetag: 13.04.2004
(51) Int. Cl.: B29B 7/32, C08L 69/00

(54) **VERFAHREN ZUR MISCHUNG VON POLYMERSCHMELZEN MIT ADDITIVEN**
METHOD FOR MIXING POLYMER MELTS WITH ADDITIVES
PROCEDE POUR MELANGER DES MATIERES POLYMERES FONDUES AVEC DES ADDITIFS

(30) Priorität: 22.04.2003 DE 10318108
(43) Veröffentlichungstag der Anmeldung: 25.01.2006
(73) Patentinhaber: Bayer MaterialScience AG, 51368 Leverkusen (DE)
(72) Erfinder: KOHLGRÜBER, Klemens, 51515 Kürten (DE); HOLDENRIED, Günther, 42799 Leichlingen (DE); KORDS, Christian, 47829 Krefeld (DE); HEUSER, Jürgen, 47803 Krefeld (DE); KÖNIG, Thomas, 51375 Leverkusen (DE)
(86) Internationale Anmeldenummer: PCT/EP2004/003853
(87) Internationale Veröffentlichungsnummer: WO 2004/094122

(56) Entgegenhaltungen:
- WO-A-01/25333
- US-B1- 6 469 072
- PAHL M.H. ; MUSCHELKNAUTZ E.: "Statische Mischer und ihre Anwendung" CHEMIE INGENIEUR TECHNIK, Bd. 52, Nr. 4, 1980, Seiten 285-291, XP002286463

## Beschreibung

Die Erfindung betrifft ein Verfahren zur Mischung von Polymerschmelzen mit Additiven und thermoplastische Formmassen aus insbesondere Polycarbonat. Dabei wird ein in Schmelzeform vorliegender Hauptstrom aus Polymer, z.B. Polycarbonat in einer Mischvorrichtung ohne bewegte Teile mit einem Seitenstrom aus Additiven vermischt. Der Seitenstrom kann aus einer Mischung von aufgeschmolzenem Granulat und Additiven bestehen. Diese Methode unterdrückt unerwünschte Nebenreaktionen von Additiven und Polymer und führt so zu Produkten, die eine sehr gute Eigenfarbe und hervorragende anwendungstechnische Eigenschaften haben. Weiterhin erlaubt die Erfindung die wirtschaftliche Wiederverwertung von nicht spezifikationsgerechter Sekundaware.

Additive können bekannterweise bei hoher Temperatur unerwünschte Reaktionen erleiden, sowohl mit der Polymermatrix oder anderen Additiven als auch ohne weiteren Reaktionspartner. Durch derartige Reaktionen wird einerseits die Menge an zugesetzten Additiven vermindert, was ihre Wirkung schmälert. Andererseits können Folgeprodukte der Reaktionen sich auch nachteilig auf die Qualität des Polymers auswirken, beispielsweise durch Verschlechterung der Farbe. Hierbei wirkt vor allem eine lange Verweilzeit bei hoher Temperatur schädlich.

Für thermoplastische Formmassen gibt es bekanntermaßen vielfältige Spezifikationen, die dem Fachmann auf diesem Gebiet vertraut sind. Dies können beispielsweise Anzahl- oder Gewichtsmittel des Molekulargewichts, chemische Zusammensetzung, Verzweigungsgrad oder -ordnung, Gehalte an flüchtigen oder extrahierbaren Stoffen, Vernetzungsgrad von elastomeren Phasen, Viskositäten bei verschiedenen Schergeschwindigkeiten, Schmelzeflussindex, Gehalte an Additiven, Gehalte an Endgruppen von Molekülen, Gehalt an nicht aufschmelzbaren und/oder verfärbten Partikeln, Geruch, Farbe oder die Form des Produktes nach der Konfektionierung sein. Die Gründe, warum diese Spezifikationen verletzt werden können, sind ebenso vielfältig. Dies kann beispielsweise an Schwankungen in der Qualität der Ausgangsware liegen oder an den verschiedenartigsten Störungen im Prozess. Ein weiterer Grund für nicht spezifikationsgerechte Ware kann in Anfahrvorgängen oder in der Notwendigkeit liegen, bei Wechsel von Durchsätzen oder Produkttypen die Spezifikation zu verlassen. Diese nicht spezifikationsgerechte Ware wird hier als Sekundaware bezeichnet. Sekundaware kann am Markt nur zu verringerten Preisen abgesetzt werden oder muss entsorgt werden, was hohe Kosten verursacht und die Umwelt durch unnötigen Verbrauch von Ressourcen belastet. Daher ist wünschenswert, ein Verfahren zu finden, mit dem diese Sekundaware wirtschaftlich verwendet werden kann.

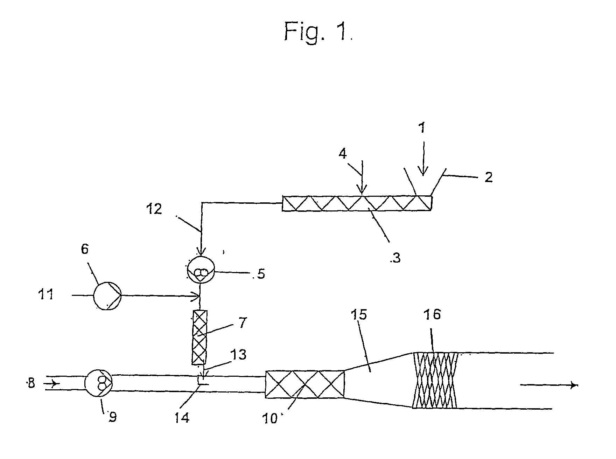

Die Mischung von Additiven mit verschiedene Polymere mit Hilfe von Mischern ohne bewegte Teile (Statikmischern) ist prinzipiell bekannt. In "Chemische Industrie", 37(7), Seite 474-476, ist ein dem Stand der Technik entsprechender Einsatz von Statikmischern für derartige Zwecke dargelegt. Polystyrol, HIPS und LLDPE werden erwähnt. Die dort in Abbildung 2 gezeigten Mischer vom Typ SMX entsprechen dem heutigen Stand der Technik und werden in der Großtechnik häufig eingesetzt. Abbildung 1 zeigt zwei Verfahrensvarianten, die im Folgenden mit 2.1 und 2.2. gekennzeichnet werden:
2.1. Die Additive werden in flüssiger Form vor einen Statikmischer im Hauptstrom dosiert. Nachteil dieses Verfahrens ist, dass die Sicherheit gegen das Durchschlagen von Tröpfchen einen sehr langen Statikmischer im Hauptstrom erfordert, der hohen Druckverlust und eine lange Verweilzeit erfordert. Die lange Verweilzeit ist ungünstig, da in dieser Zeit unerwünschte Nebenreaktionen der Additivkomponenten, der Additivkomponenten untereinander oder mit dem Hauptstrom möglich sind.
2.2. Pigmente und feste Zuschlagstoffe werden über einen Extruder vor den Statikmischer befördert.

In dieser Literaturstelle wird auch beschrieben, dass ein niederviskoses Additiv in einem Bypass-Mischer einem Seitenstrom von ca. 10 % des Gesamtstromes beigemischt wird.

In DE 40 39 857 A1 wird ein weiteres Verfahren zur Einmischung von Additiven in einen Polymerstrom beschrieben, wobei Polyamid- und Polyesterschmelzen bevorzugt werden. Dabei wird einem Hauptstrom ein Seitenstrom entnommen, die Additive mit Hilfe eines schmelzegefütterten Extruders mit dem Seitenstrom gemischt und mit Hilfe eines Statikmischers wieder mit dem Hauptstrom vermischt. Nachteil dieses Verfahrens ist die im Extruder unvermeidliche Erhöhung der Temperatur eines Teils des Hauptstroms, was einerseits die Qualität des Polymers mindern kann und wiederum unerwünschte Nebenreaktionen der Additivkomponenten, der Additivkomponenten untereinander oder mit dem Polymer des Neben- oder Hauptstroms ermöglichen. Eine Verwertung von Sekundaware ist dort nicht beschrieben.

DE 198 41 376 A1 beschreibt ein weiteres Verfahren zur Einmischung von Additiven in Polymere, wobei die Beispiele hierbei auf Polyester und Copolyester abzielen. Auch hierbei wird ein Seitenstrom aus dem Hauptstrom entnommen, und zwar mittels einer Planetenzahnradpumpe. Die Additive werden über einen Statikmischer mit dem Seitenstrom vermischt und der Seitenstrom hinterher wiederum über einen Statikmischer mit dem Hauptstrom. Bei diesem Verfahren ist es nicht möglich; Sekundaware in den Hauptstrom einzuarbeiten. Auch ist das Temperaturniveau auf das des Hauptstromes festgelegt, so dass schädliche Reaktionen der Additive bei dieser Temperatur vorkommen können.

In EP 0 905 184 A2 wird angegeben, dass zur Einmischung von Additiven in Polycarbonat in der Schmelze Extruder, Banbury-Mischer, Walzenstühle oder Kneter verwendet werden können. All diese Geräte haben den Nachteil, dass sie das Polymer und die Additive durch Energieeintrag und damit verbundene Temperaturerhöhung schädigen können. Die Handhabung von thermoplastischem Polycarbonat auf einem Walzenstuhl dürfte nur für den Laborgebrauch geeignet sein.

Zum Stand der Technik gehören weiterhin folgende Anmeldungen und Veröffentlichungen:

DE 199 47 630 A1 beschreibt ein Verfahren zur kontinuierlichen Herstellung eines thermoplastischen Polymerblends und dessen Verwendung. In diesem Verfahren wird ein Strom direkt der Primärproduktion entnommen und in einem Mischer mit einem Seitenstrom eines anderen Polymers vermischt wird, der Additive enthalten kann.

DE 100 50 023 A1 beschreibt eine Mischvorrichtung und ein Verfahren zur Herstellung von thermoplastisch verarbeitbaren Formmassen, insbesondere Additivbatches, unter Verwendung zweier Schneckenmaschinen.

In "Plastverarbeiter", 11(43), 1992, "Statisches Mischen in der Kunststoffverarbeitung und -herstellung" wird ein Überblick über die Mischoperationen, die mit statischen Mischern durchgeführt werden, gegeben. Dort wird speziell auf die verschiedenartigen Einsatzmöglichkeiten des statischen Mischers vom Typ SMX eingegangen, zu denen auch das. Einmischen von niedrigviskosen Additiven in Polymerschmelzen gehört. Das einzige dort genannte Produktbeispiel ist die Einmischung von Mineralöl in Polystyrol.

Aufgabe der vorliegenden Erfindung war es, ein Verfahren zur Vermischung eines Hauptstroms von Polycarbonat mit Additiven zu finden, mit dem die Nachteile des Standes der Technik ausgeglichen werden und dass eine Minimierung der Temperaturbelastung der Additive und der Einsatz von Sekundaware ermöglicht.

Bevorzugt ist ein Verfahren, dadurch gekennzeichnet, dass die Temperatur des Hauptstromes vor der Vermischung kleiner als 320°C, bevorzugt kleiner als 310°C und besonders bevorzugt kleiner als 300°C ist.

Die Verweilzeit des Hauptstromes im Statikmischer beträgt bevorzugt 20 bis 120 Sekunden, besonders bevorzugt 30 bis 60 Sekunden.

Bevorzugt ist auch ein Verfahren, dadurch gekennzeichnet, dass die Additive in Form eines Seitenstroms aus einer Vormischung von Polycarbonatschmelze und Additiv dem Hauptstrom zugeführt werden.

Das Masseverhältnis des Seitenstroms zum Hauptstrom beträgt bevorzugt 1:4 bis 1:30, besonders bevorzugt 1:5 bis 1:20.

Bevorzugt ist auch ein Verfahren, dadurch gekennzeichnet, dass der Seitenstrom aus aufgeschmolzenem Polycarbonatgranulat und/oder Polycarbonatbruchware insbesondere aus Polycarbonat-Recyclingmaterial gebildet wird.

Bevorzugt ist ebenfalls ein Verfahren, dadurch gekennzeichnet, dass ein Teil der Additive oder alle Additive nach dem Aufschmelzen des Polycarbonats für den Seitenstrom zugeführt und mit einem weiteren Statikmischer zur Bildung des Seitenstroms eingemischt werden.

Die Verweilzeit im weiteren Statikmischer des Seitenstroms beträgt bevorzugt 10 bis 300 Sekunden, besonders bevorzugt 20 bis 120 Sekunden und insbesondere bevorzugt 30 bis 60 Sekunden.

Weiterer Gegenstand der Erfindung ist ein kontinuierliches Verfahren zum Mischen von hochviskosen Polymerschmelzen als Hauptstrom in einem Strömungsrohr mit Additiven aus einem flüssigen Seitenstrom, dadurch gekennzeichnet, dass die Additive mit einem Teil der Polymerschmelze zu dem Seitenstrom vorvermischt werden, dass der additivhaltige Seitenstrom über eine insbesondere zentral im Strömungsrohr angeordnete Zuleitung in den Hauptstrom eingespeist wird, die vereinigten Ströme in einem direkt nachgeschalteten ersten statischen Mischer (10, Fig. 1) intensiv vermischt werden und diese Vormischung in einem Mischrohr mit vergrößertem Querschnitt und einem zweiten statischen Mischer (16, Fig. 1) mit feinerer Struktur (kleinere Maschenweite, d.h. mehr Produktdurchgangsöffnungen pro Fläche) feinverteilt wird.

Als geeignete Polymere kommen alle thermoplastischen Polymere bevorzugt Polystyrol, Copolymere von Styrol mit Acrylsäure, Methacrylsäure, alpha-Methyl-Styrol, Acrylsäureester wie Methylmethacrylat, Butylacrylat etc., vor allem Acrylnitril (SAN) in Frage. Diese Polymere können mit einer Kautschukphase, z.B. Polybutadien, Polyisopren, Polychloropren, EPDM, Polybutylacrylat etc. modifiziert sein, beispielsweise mit den o. g. Copolymeren gepfropfte Polybutadiene oder Polybutylacrylate (z.B. ABS).

In einem bevorzugten Verfahren ist der Querschnitt des Mischrohrs des zweiten Statikmischers (16, Fig. 1) um mindestens das 1,2fache, bevorzugt mindestens das 2fache, besonders bevorzugt mindestens das 3fache größer, als der Querschnitt des Mischrohres des ersten Statikmischers (10, Fig. 1).

Bevorzugt ist auch ein Verfahren, in dem die Zahl der Produktdurchgangsöffnungen (pro Flächeneinheit) im zweiten statischen Mischer (16, Fig. 1) mindestens das 1,5fache der Zahl der Produktdurchgangsöffnungen (pro Flächeneinheit) im ersten statischen Mischer (10, Fig. 1) beträgt.

Produktdurchgangsöffnungen sind alle Bohrungen und Öffnungen in dem statischen Mischer, die im Querschnitt durch Mischer und Rohrleitung gesehen von Produkt durchströmt werden.

Bevorzugt wird ferner ein Verfahren, dadurch gekennzeichnet, dass die Mischung in einer dem zweiten statischen Mischer nachgeschalteten dritten statischen Mischer mit oder ohne vergrößerten Querschnitt fein vermischt wird.

Das Verfahren ist insbesondere Polymermischungen zugänglich, bei denen die Mischung eine Viskosität im Bereich von 1 Pa*s bis 10⁷ Pa*s aufweist.

Additive können dem Polymer vielfältige Eigenschaften verleihen. Dies können beispielsweise Antioxidantien, UV-Absorber und Lichtstabilisatoren, Metalldesaktivatoren, Peroxidfänger, basische Costabilisatoren, Keimbildner, als Stabilisatoren oder Antioxidatien wirksame Benzofurane und Indolinone, Formtrennmittel, flammhemmende Additive, antistatische Mittel, Färbemittel und Schmelzestabilisatoren.

Für die Durchführung des Verfahrens bevorzugt geeignete Additive sind beispielsweise beschrieben in Additives for Plastics Handbook, John Murphy, 1999 oder Plastics Additives Handbook Hans Zweifel, 2001.
1.1. Für die Durchführung des Verfahrens bevorzugt geeignete Antioxidantien sind beispielsweise:
1.1.1. Alkylierte Monophenole, zum Beispiel 2,6-Di-tert-butyl-4-methylphenol, 2-tert-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Dicyclopentyl-4-methylphenol, 2-(α-Methylcyclohexyl)-4,6-dimethylphenol, 2,6-Dioctadecyl-4-methylphenol, 2,4,6-Tricyclohexylphenol, 2,6-Di-tert-butyl-4-methoxymethylphenol, Nonylphenole, die in der Seitenkette linear oder verzweigt sind, zum Beispiel, 2,6-Di-nonyl-4-methylphenol, 2,4-Dimethyl-6-(1'-methylundec-1'-yl)phenol, 2,4-Dimethyl-6-(1'-methylheptadec-1'-yl)phenol, 2,4-Dimethyl-6-(1'-methyltridec-1'-yl)phenol.
1.1.2. Alkylthiomethylphenole, zum Beispiel 2,4-Dioctylthiomethyl-6-tert-butylphenol, 2,4-Dioctylthiomethyl-6-methylphenol, 2,4-Dioctylthiomethyl-6-ethylphenol, 2,6-Didodecylthiomethyl-4-nonylphenol.
1.1.3. Hydrochinone und alkylierte Hydrochinone, zum Beispiel 2,6-Di-tert-butyl-4-methoxyphenol, 2,5-Di-tert-butylhydrochinon, 2,5-Di-tert-amylhydrochinon, 2,6-Diphenyl-4-octadecyloxyphenol, 2,6-Di-tert-butylhydrochinon, 2,5-Di-tert-bütyl-4-hydroxyanisol, 3,5-Di-tert-butyl-4-hydroxyanisol, 3,5-Di-tert-butyl-4-hydroxyphenyl-stearat, Bis(3,5-di-tert-butyl-4-hydroxyphenyl)adipat.
1.1.4. Tocopherole, zum Beispiel α-Tocopherol, β-Tocopherol, γ-Tocopherol, δ-Tocopherol und Gemische davon (Vitamin E).
1.1.5. Hydroxylierte Thiodiphenylether, zum Beispiel 2,2'-Thiobis(6-tert-butyl-4-methylphenol), 2,2'-Thiobis(4-octylphenol), 4,4'-Thiobis(6-tert-butyl-3-methyl-phenol), 4,4'-Thiobis(6-tert-butyl-2-methylphenol), 4,4'-Thiobis(3,6-di-sec-amylphe-nol), 4,4'-Bis(2,6-dimethyl-4-hydroxyphenyl)disulfid.
1.1.6. Alkylidenbisphenole, zum Beispiel 2,2'-Methylenbis(6-tert-butyl-4-methylphenol), 2,2'-Methylenbis(6-tert-butyl-4-ethylphenol), 2,2'-Methylenbis[4-methyl-6-(α-methylcyclohexyl)phenol], 2,2'-Methylenbis(4-methyl-6-cyclohexylphe-nol), 2,2'-Methylenbis(6-nonyl-4-methylphenol), 2,2'-Methylenbis(4,6-di-tert-butyl-phenol), 2,2'-Ethylidenbis(4,6-di-tert-butylphenol), 2,2'-Ethylidenbis(6-tert-butyl-4-isobutylphenol), 2,2'-Metbylenbis[6-(α-methylbenzyl)-4-nonylphenol], 2,2'-Methylenbis[6-(α,α-dimethylbenzyl)-4-nonylphenol], 4,4'-Methylenbis(2,6-di-tert-butylphenol), 4,4'-Methylenbis(6-tert-butyl-2-methylphenol), 1,1-Bis(5-tert-butyl-4-hydroxy-2-methylphenyl)butan, 2,6-Bis(3-tert-butyl-5-methyl-2-hydroxybenzyl)-4-methylphenol, 1,1,3-Tris(5-tert-butyl-4-hydroxy-2-methylphenyl)butan, 1,1-Bis(5-tert-butyl-4-hydroxy-2-methylphenyl)-3-n-dodecylinercaptobutan, Ethylengly-colbis[3,3-bis(3'-tert-butyl-4'-hydroxyphenyl)butyrat], Bis(3-tert-butyl-4-hydroxy-5-methyl-phenyl)dicyclopentadien, Bis[2-(3'-tert-butyl-2'-hydroxy-5'-methylbenzyl)-6-tert-butyl-4-methylphenyl]terephthalat, 1,1-Bis(3,5-dimethyl-2-hydroxyphenyl)butan, 2,2-Bis-(3,5-di-tert-butyl-4-hydroxyphenyl)propan, 2,2-Bis(5-tert-butyl-4-hydroxy-2-methylphenyl)-4-n-dodecylmercaptobutan, 1,1,5,5-Tetra-(5-tert-butyl-4-hydroxy-2-methylphenyl)-pentan.
1.1.7. O-, N- und S-Benzylverbindungen, zum Beispiel 3,5,3',5'-Tetra-tert-butyl-4,4'-dihydroxydibenzylether, Octadecyl-4-hydroxy-3,5-dimethylbenzylmercaptoacetat, Tridecyl-4-hydroxy-3,5-di-tert-butylbenzylmercaptoacetat, Tris(3,5-di-tert-butyl-4-hydroxybenzyl)amin, Bis(4-tert-butyl-3-hydroxy-2,6-dimethylbenzyl)dithioterephthalat, Bis(3,5-di-tert-butyl-4-hydroxybenzyl)sulfid, Isooctyl-3,5-di-tert-butyl-4-hydroxybenzylmercaptoacetat.
1.1.8. Hydroxybenzylierte Malonate, zum Beispiel Dioctadecyl-2,2-bis(3,5-di-tert-butyl-2-hydroxybenzyl)malonat, Dioctadecyl-2-(3-tert-butyl-4-hydroxy-5-methyl-benzyl)malonat, Didodecylmercaptoethyl-2,2-bis(3,5-di-tert-butyl-4-hydroxybenzyl)malonat, Bis[4-(1,1,3,3-tetramethylbutyl)phenyl]-2,2-bis(3,5-di-tert-butyl-4-hydroxy-benzyl)malonat.
1.1.9. Aromatische Hydroxybenzylverbindungen, zum Beispiel 1,3,5-Tris-(3,5-di-tert-butyl-4-hydroxybenzyl)-2,4,6-trimethylbenzol, 1,4-Bis(3,5-di-tert-butyl-4-hydroxy-benzyl)-2,3,5,6-tetramethylbenzol, 2,4,6-Tris(3,5-di-tert-butyl-4-hydroxybenzyl)phenol.
1.1.10. Triazinverbindungen, zum Beispiel 2,4-Bis(octylmercapto)-6-(3,5-di-tert-butyl-4-hydroxy-anilino)-1,3,5-triazin, 2-Octylmercapto-4,6-bis(3,5-di-tert-butyl-4-hydroxy-anilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1,3,5-Tris-(3,5-di-tert-butyl-4-hydroxybenzyl)isocyanurat, 1,3,5-Tris(4-tert-butyl-3-hydroxy-2,6-dimethylbenzyl)isocy-anurat, 2,4,6-Tris(3,5-di-tert-butyl-4-hydroxyphenylethyl)-1,3,5-triazin, 1,3,5-Tris(3,5-di-tert-butyl-4-hydroxyphenylpropioyl)hexahydro-1,3,5-triazin, 1,3,5-Tris(3,5-dicyclohexyl-4-hydroxybenzyl)isocyanurat.
1.1.11. Acylaminophenole, zum Beispiel 4-Hydroxylauranilid, 4-Hydroxytearanilid, Octyl-N-(3,5-di-tert -butyl-4-hydroxyphenyl)carbamat.
1.1.12. Ester von β-(3,5-Di-tert-butyl-4-hydroxyphenyl)propionsäure mit ein- oder mehrwertigen Alkoholen, z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis-(hydroxyethyl)oxamid, 3-Thiaundecanol, 3-Thiapentadecanol, Trimethylhexandiol, Trimethylolpropan, 4-Hydroxymethyl-l-phospha-2,6,7-trioxabicyclo[2.2.2]octan.
1.1.13. Ester von β-(5-tert-Butyl-4-hydroxy-3-methylphenyl)propionsäure mit ein- oder mehrwertigen Alkoholen, z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]octan.
1.1.14. Ester von β-(3,5-Dicyclohexyl-4-hydroxyphenyl)propionsäure mit ein- oder mehrwertigen Alkoholen, z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl) isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabi-cyclo[2.2.2]octan.
1.1.15. Ester von 3,5-Di-tert-butyl-4-hydroxyphenylessigsäure mit ein- oder mehrwertigen Alkoholen, z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.
1.1.16. Amide of β-(3,5-Di-tert-butyl-4-hydroxyphenyl)propionsäure, z.B. N,N'-Bis(3,5-di-tert-butyl-4-hydroxyphenylpropionyl)hexamethylendiamid, N,N'-Bis(3,5-di-tert-butyl-4-hydroxyphenylpropionyl)trimethylendiamid, N,N'-Bis(3,5-di-tert-butyl-4-hydroxyphenylpro-pionyl)hydrazid, N,N'-Bis[2-(3-[3,5-di-tert-butyl-4-hydroxyphenyl]-propionyloxy)ethyl]-oxamid (Naugard® XL-1 von Uniroyal).
1.1.17. Ascorbinsäure (Vitamin C)
1.1.18. Aminische Antioxidantien, zum Beispiel N,N'-Diisopropyl-p-phenylendiamin, N,N'-Disec-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N.N'-Dicyclohexyl-p-phenylendiamin, N,N'-Diphenyl-p-phenylen-diamin, N,N'-Bis(2-naphthyl)-p-phenylendiamin, N-Isopropyl-N'-phenyl-p-phenylen-diamin, N-(1,3-Dimethylbutyl)-N'-phenyl-p-phenylendiamin, N-(1-Methylheptyl)-N'-phenyl-p-phenylendiamin, N-Cyclohexyl-N'-phenyl-p-phenylendiamin, 4-(p-Toluolsulfamoyl)diphenylamin, N,N'-Dimethyl-N,N'-di-sec-butyl-p-phenylendiamin, Diphenylamin, N-Allyldiphenylamin, 4-Isopropoxy-diphenylamin, N-Phenyl-1-naphthylamin, N-(4-tert-Octylphenyl)-1-naphthylamin, N-Phenyl-2-naphthylamin, octyliertes Diphenylamin, zum Beispiel p,p'-Di-tert-octyl-diphenylamin, 4-n-Butylaminophenol; 4-Butyrylaminophenol, 4-Nonanoyl-aminophenol, 4-Dodecanoylaminophenol, 4-Octadecanoylaminophenol, Bis(4-methoxyphenyl)amin, 2,6-Di-tert-butyl-4-dimethylaminomethylphenol, 2,4'-Diaminodiphenylmethan, 4,4'-Diaminodiphenylmethan, N,N,N',N'-Tetramethyl-4,4'-diaminodiphenylmethan, 1,2-Bis[(2-methylphenyl)amino]ethan, 1,2-Bis(phenyl-amino)propan, (o-Tolyl)biguanid, Bis[4-(1',3'-dimethylbutyl)phenyl]amin, tert-octyliertes N-Phenyl-1-naphthylamin, ein Gemisch von mono- und dialkylierten tert-Butyl/tert-Octyldiphenylaminen, ein Gemisch von mono- und dialkylierten Nonyldiphenylaminen, ein Gemisch von mono- und dialkylierten Dodecyldiphenylaminen, ein Gemisch von mono- und dialkylierten Isopropyl/Isohexyldiphenylaminen, ein Gemisch von mono- und dialkylierten tert-Butyldiphenylaminen, 2,3-Dihydro-3,3-dimethyl-4H-1,4-benzothiazin, Phenothiazin, ein Gemisch von mono-und dialkylierten tert-Butyl/tert-Octylphenothiazinen, ein Gemisch von mono- und dialkylierten tert-Octylphenothiazinen, N-Allylphenothiazin, N,N,N',N'-Tetraphenyl-1,4-diaminobut-2-en, N,N-bis(2,2,6,6-tetramethylpiperid-4-ylhexamethylendiamin, Bis(2,2,6,6-tetramethylpiperid-4-yl)sebacat, 2,2,6,6-Tetramethylpiperidin-4-on, 2,2,6,6-Tetra-methylpiperidin-4-ol. Es können einzelne dieser Verbindungen oder Gemische derselben eingesetzt werden.
1.1.19. Für die Durchführung des Verfahrens bevorzugt geeignete Thiosynergisten sind zum Beispiel Dilaurylthiodipropionat und/oder Distearylthiodipropionat.
1.1.20 Sekundäre Antioxidantien, Phosphite und Phosphonite sind beispielsweise Tris-(nonylphenyl)-phosphit, Tris(2,4-ditert-butylphenyl)phosphit, 3,9-Bis(2,4-di-tert-butylphenoxy)-2,4,8,10-tetraoxa-3,9-diphosphaspiro[5.5]undecan, 3,9-Bis(2,6-di-tert-butyl-4-methylphenoxy)-2,4,8,10-tetraoxa-3,9-diphosphaspiro(5.5)undecan, 2,2'-Methylenebis(4,6-di-tert-butylphenyl) octyl phosphit, Tetralds(2,4-di-tert-butylphenyl)-[1,1-biphenyl]-4,4'-diylbis-phosphonit, 2,2'-Ethylidenebis(4,6-di=tert-butylphenyl) fluorophosphit, o,o'-Dioctade-cylpentaerythritbis(phosphit, Tris[2-[[2,4,8,10-tetra-tert-butyldibenzo[d,f][1,3,2]dioxa-phosphepin-6-yl]oxy]ethyl]amin, Bis(2,4-di-tert-butyl-6-methylphenyl) ethyl phosphite, 2-Butyl-2-ethyl-1,3-propanediyl 2,4,6-tri-tert-butylphenyl-phosphite, Pentaerythrit-bis-((2,4-dicumylphenyl)-phosphit), 2-4-6-tri-tert-butylphenyl-2-butyl-2-ethyl-1,3-propandiole-phosphit.
1.2. UV-Absorber und Lichtstabilisatoren können in dem erfindungsgemäßen Verfahren in einer Menge von 0,01 bis 15 Gew.-%, vorzugsweise 0,03 bis 8 Gew.-%, bezogen auf die Masse der Zusammensetzung, eingesetzt werden. Für die Durchführung des Verfahrens bevorzugt geeignete UV-Absorber und Lichtstabilisatoren sind beispielsweise:
1.2.1. 2-(2'-Hydroxyphenyl)benzotriazole, um Beispiel 2-(2'-Hydroxy-5'-methylphenyl)benzotriazol, 2-(3',5'-Di-tert-butyl-2'-hydroxyphenyl)benzotriazol, 2-(5'-tert-Butyl-2'-hydroxy-phenylbenzotriazol, 2-(2'-Hydroxy-5'-(1,1,3,3-tetramethylbutyl) phenyl)benzo-triazol, 2-(3',5'-Di-tert-butyl-2'-hydroxyphenyl)-5-chlorbenzo-triazol, 2-(3'-tert-Butyl-2'-hydroxy-5'-methylphenyl)-5-chlorbenzotriazol, 2-(3'-sec-Butyl-5'-tert-butyl-2'-hydroicyphenyl)benzotriazol, 2-(2'-Hydroxy-4'-octyloxyphenyl)benzotriazol, 2-(3',5'-Di-tert-amyl-2'-hydroxyphenyl)benzotriazol, 2-(3',5'-Bis(α,α-dimethylbenzyl)-2'-hydroxyphenyl)benzotriazol, 2-(3'-tert-Butyl-2'-hydroxy-5'-(2-octyloxycarbonyl-ethyl)phenyl)-5-chlorbenzotriazol, 2-(3'-tert-Butyl-5'-[2-(2-ethyl-hexyloxy)carbonyl-ethyl]-2'-hydroxyphenyl)-5-chlorbenzotriazol, 2-(3'-tert-Butyl-2'-hydroxy-5'-(2-meth-oxycarbonylethyl)phenyl)-5-chlorbenzotriazol, 2-(3'-tert-Butyl-2'-hydroxy-5'-(2-methoxycarbonylethyl)phenyl)benzotriazol, 2-(3'-tert-Butyl-2'-hydroxy-5'-(2-octyl-oxycarbonylethyl)phenyl)benzotriazol, 2-(3'-tert-Butyl-5'-[2-(2-ethyl-hexyloxy)carbonylethyl]-2'-hydroxyphenyl)benzotriazol, 2-(3'-Dodecyl-2'-hydroxy-5'-methylphenyl)benzotriazol, 2-(3'-tert-Butyl-2'-hydroxy-5'-(2-isooctyl-oxycarbonylethyl)phenylbenzotriazol, 2,2'-Methylenbis[4-(1,1,3,3-tetramethylbutyl)-6-benzotriazol-2-ylphenol]; das Umesterungsprodukt von 2-[3'-tert-Butyl-5'-(2-methoxycarbonylethyl)-2'-hydroxyphenyl]-2H-benzotriazol mit Polyethylenglycol 300; [R-CH₂CH₂-COO-CH₂CH₂]₂, wobei R = 3'-tert-Butyl-4'-hydroxy-5'-2H-benzotriazol-2-ylphenyl, 2-[2'-Hydroxy-3'-(α,α-dimethylbenzyl)-5'-(1,1,3,3-tetra-methylbutyl)phenyl]benzotriazol, 2-[2'-Hydroxy-3'-(1,1,3,3-tetramethylbutyl)-5'-(α,α-dimethylbenzyl)phenyl]benzotriazol.
1.2.2. 2-Hydroxybenzophenone, zum Beispiel die 4-Hydroxy-, 4-Methoxy-, 4-Octyloxy-, 4-Decyloxy-, 4-Dodecyloxy-, 4-Benzyloxy-, 4,2',4'-Trihydroxy- und 2'-Hydroxy-4,4'-di-methoxy-Derivate.
1.2.3. Ester von substituierten und unsubstituierten Benzoesäuren, wie zum Beispiel 4-tert-Butylphenylsalicylat, Phenylsalicylat, Octylphenylsalicylat, Bibenzoylresorcin, Bis(4-tert-butylbenzoyl)resorcin, Benzoylresorcin, 2,4-Di-tert-butylphenyl-3,5-di-tert-butyl-4-hydroxybenzoat, Hexadecyl-3,5-di-tert-butyl-4-hydroxybenzoat, Octadecyl-3,5-di-tert-butyl-4-hydroxybenzoat, 2-Methyl-4,6-di-tert-butylphenyl-3,5-di-tert-butyl-4-hydroxybenzoat.
1.2.4. Acrylate, zum Beispiel Ethyl-α-cyan-β,β-diphenylacrylat, Isooctyl-α-cyan-β,β-diphenyl-acrylat, Methyl-α-carbomethoxycinnamat, Methyl-α-cyan-β-methyl-p-methoxycinnamat, Butyl-α-cyan-β-methyl-p-methoxycinnamat, Methyl-α-carbomethoxy-p-methoxycinnamat und N-(β-Carbomethoxy-β-cyanvinyl)-2-methylindolin.
1.2.5. Nickelverbindungen, zum Beispiel Nickelkomplexe von 2,2'-Thiobis[4-(1,1,3,3-tetramethylbutyl)phenol], wie der 1:1- oder 1:2-Komplex, mit oder ohne zusätzliche Liganden, wie n-Butylamin, Triethanolamin oder N-Cyclohexyldiethanolamin, Nickeldibutyldithiocarbamat, Nickelsalze der Monoalkylester, z.B. des Methyl- oder Ethylesters, von 4-Hydroxy-3,5-di-tert-butylbenzylphosphonsäure, Nickelkomplexe von Ketoximen, z.B. von 2-Hydroxy-4-methylphenylundecylketoxim, Nickelkomplexe von 1-Phenyl-4-lauroyl-5-hydroxypyrazol, mit oder ohne zusätzliche Liganden.
1.2.6. Sterisch gehinderte Amine, zum Beispiel Bis(2,2,6,6-tetramethyl-4-piperidyl)sebacat, Bis(2,2,6,6-tetramethyl-4-piperidyl)succinat, Bis(1,2,2,6,6-pentamethyl-4-piperidyl)se-bacat, Bis(1-octyloxy-2,2,6,6-tetramethyl-4-piperidyl)sebacat, Bis(1,2,2,6,6-pentamethyl-4-piperidyl), n-Butyl-3,5-di-tert-butyl-4-hydroxy-benzylmalonat, das Kondensat von 1-(2-Hydroxyethyl)-2,2,6,6-tetramethyl-4-hydroxypiperidin und Bernsteinsäure, lineare oder cyclische Kondensate von N,N'-Bis(2,2,6,6-tetramethyl-4-piperidyl)hexamethylendiamin und 4-tert-Octylamino-2,6-dichlor-1,3,5-triazin, Tris(2,2,6,6-tetramethyl-4-piperidyl)-nitrilotriacetat, Tetrakis(2,2,6,6-tetramethyl-4-piperidyl)-1,2,3,4-butantetracarboxylat, 1,1'-(1,2-Ethandiyl) bis(3,3,5,5-tetramethylpiperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)malonat, 3-n-Octyl-7,7,9,9-tetramethyl-1,3,8-triazaspiro[4.5]decan-2,4-dion, Bis(1-octyloxy-2,2,6,6-tetramethyl-piperidyl) sebacat, Bis(1-octyloxy-2,2,6,6-tetramethylpiperidyl)succinat, lineare oder cyclische Kondensate von N,N'-Bis(2,2,6,6-tetramethyl-4-piperidyl)hexamethylendiamin und 4-Morpholino-2,6-dichlor-1,3,5-triazin, das Kondensat von 2-Chlor-4,6-bis(4-n-butylamino-2,2,6,6-tetramethylpiperidyl)-1,3,5-triazin und 1,2-Bis(3-aminopropyl-amino)ethan, das Kondensat von 2-Chlor-4,6-bis(4-n-butylamino-1,2,2,6,6-penta-methylpiperidyl)-1,3,5-triazin und 1,2-Bis(3-aminopropylamino)ethan, 8-Acetyl-3-dodecyl-7,7,9,9-tetramethyl-1,3,8-triazaspiro-[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)pyrrolidin-2,5-dion, ein Gemisch von 4-Hexadecyloxy- und 4-Stearyloxy-2,2,6,6-tetramethylpiperidin, ein Kondensationsprodukt von N,N'-Bis(2,2,6,6-tetramethyl-4-piperidyl)hexamethylendiamin und 4-Cyclohexylamino-2,6-dichloro-1,3,5-triazin, ein Kondensationsprodukt von 1,2-Bis(3-amino-propylamino)ethan und 2,4,6-Trichlor-1,3,5-triazin sowie 4-Butylamino-2,2,6,6-tetramethylpiperidin (CAS Reg. No. [136504-96-6]); N-(2,2,6,6-Tetramethyl-4-piperidyl)-n-dodecylsuccinimid, N-(1,2,2,6,6-Pentamethyl-4-piperidyl)-n-dodecyl-succinimid, 2-Undecyl-7,7,9,9-tetramethyl-1-oxa-3,8-diaza-4-oxospiro[4.5]decan, ein Reaktionsprodukt von 7,7,9,9-Tetramethyl-2-cycloundecyl-1-oxa-3,8-diaza-4-oxospiro[4.5]decan und Epichlorhydrin, 1,1-Bis(1,2,2,6,6-pentamethyl-4-piperidyl-oxycarbonyl)-2-(4-methoxyphenyl)-ethen, N,N'-Bis(formyl)-N,N'-bis(2,2,6,6-tetra-methyl-4-piperidyl)hexamethylendiamin, Diester von 4-Methoxymethylenmalonsäure mit 1,2,2,6,6-Pentamethyl-4-hydroxypiperidin, Poly[methylpropyl-3-oxy-4-(2,2,6,6-tetramethyl-4-piperidyl)]siloxan, Reaktionsprodukt von Maleinsäureanhydrid-α-Olefin-Copolymer mit 2,2,6,6-Tetramethyl-4-aminopiperidin oder 1,2,2,6,6-Pentamethyl-4-aminopiperidin.
1.2.7. Oxamide, zum Beispiel 4,4'-Dioctyloxyoxanilid, 2,2'-Diethoxyoxanilid, 2,2'-Dioctyloxy-5,5'-di-tert-butoxanilid, 2,2'-Didodecyloxy-5,5'-di-tert-butoxanilid, 2-Ethoxy-2'-ethyl-oxanilid, N,N'-Bis(3-dimethylaminopropyl)oxamid, 2-Ethoxy-5-tert-butyl-2'-ethoxanilid und dessen Gemisch mit 2-Ethoxy-2'-ethyl-5,4'-di-tert-butoxanilid, Gemische von o- und p-Methoxy-disubstituierten Oxaniliden und Gemische von o- und p-Ethoxy-disubstituierten Oxaniliden.
1.2.8. 2-(2-Hydroxyphenyl)-1,3,5-triazine, zum Beispiel 2,4,6-Tris(2-hydroxy-4-octyloxyphenyl)-1,3,5-triazin, 2-(2-Hydroxy-4-octyloxyphenyl)-4,6-bis(2,4-dimethyl-phenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-buty loxypropoxy)phenyl]-4,6-bis(2,4-dimethyl)-1,3,5-triazin, 2-[2-Hydroxy-4-(2-hydroxy-3-octyloxypropyloxy)phenyl]-4,6-bis-(2,4-dimethyl)-1,3,5-triazin, 2-[4-(Dodecyloxy/Tridecyloxy-2-hydroxypropoxy)-2-hydroxyphenyl]-4,6-bis(2,4-dimethylphenyl)-1,3,5-triazin, 2-[2-Hydroxy-4-(2-hydroxy-3-dodecyloxypropoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxy-phenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl }-4,6-bis(2,4-dimethylphenyl)-1,3,5-triazin.

Es können einzelne dieser Verbindungen oder Gemische derselben eingesetzt werden.
1.3. Für die Durchführung des Verfahrens bevorzugt geeignete Metalldesaktivatoren sind zum Beispiel N,N'-Diphenyloxamid, N-Salicylal-N'-salicyloylhydrazin, N,N'-Bis(salicyloyl)-hydrazin, N,N'-Bis(3,5-di-tert-butyl-4-hydroxyphenylpropionyl)hydrazin, 3-Salicyloyl-amino-1,2,4-triazol, Bis(benzyliden)oxalyldihydrazid, Oxanilid, Isophthaloyldihydrazid, Sebacoylbisphenylhydrazid, N,N'-Diacetyladipoyldihydrazid, N,N'-Bis(salicyloyl)oxalyldihydrazid, N,N'-Bis(salicyloyl)thiopropionyldihydrazid. Es können einzelne dieser Verbindungen oder Gemische derselben eingesetzt werden.
1.4. Für die Durchführung des Verfahrens bevorzugt geeignete Peroxidfänger sind zum Beispiel Ester von β-Thiodipropionsäure, zum Beispiel der Lauryl-, Stearyl-, Myristyl- oder Tridecylester, Mercaptobenzimidazol oder das Zinksalz von 2-Mercaptobenzimidazol, Zinkdibutyldithiocarbamat, Dioctadecyldisulfid, Pentaerythrittetrakis-(dodecyl-mercapto)propionat. Es können einzelne dieser Verbindungen oder Gemische derselben eingesetzt werden.
1.5. Für die Durchführung des Verfahrens bevorzugt geeignete basische Costabilisatoren sind zum Beispiel Melamin, Polyvinylpyrrolidon, Dicyandiamid, Triallylcyanurat, Harnstoffderivate, Hydrazinderivate, Amine, Polyamide, Polyurethane, Alkalimetallsalze und Erdalkalimetallsalze höherer Fettsäuren, zum Beispiel Calciumstearat, Zinkstearat, Magnesiumbehenat, Magnesiumstearat, Natriumricinoleat und Kaliumpalmitat, Antimonpyrocatecholat oder Zinkpyrocatecholat. Es können einzelne dieser Verbindungen oder Gemische derselben eingesetzt werden.
1.6. Für die Durchführung des Verfahrens bevorzugt geeignete Keimbildner sind zum Beispiel anorganische Substanzen, wie Talk, Metalloxide, wie Titandioxid oder Magnesiumoxid, Phosphate, Carbonate oder Sulfate, vorzugsweise von Erdalkalimetallen; organische Verbindungen, wie Mono- oder Polycarbonsäuren und deren Salze, z.B. 4-tert-Butylbenzoesäure, Adipinsäure, Diphenylessigsäure, Natriumsuccinat oder Natriumbenzoat; polymere Verbindungen, wie ionische Copolymere (Ionomere). Besonders bevorzugt sind 1,3:2,4-Bis(3',4'-dimethylbenzyliden)sorbit, 1,3:2,4-Di(paramethyldibenzyliden)sorbit und 1,3:2,4-Di(benzyliden)sorbit. Es können einzelne dieser Verbindungen oder Gemische derselben eingesetzt werden.
1.7. Für die Durchführung des Verfahrens bevorzugt geeignete andere Additive sind zum Beispiel Weichmacher, Gleitmittel, Emulgatoren, Pigmente, Viskositätsmodifikatoren, Katalysatoren, Verlaufmittel, optische Aufheller, Flammschutzmittel, antistatische Mittel und Treibmittel.
1.8. Für die Durchführung des Verfahrens bevorzugt geeignete Benzofuranone und Indolinone sind zum Beispiel diejenigen, die in U.S. 4,325,863; U.S. 4,338;244; U.S. 5,175,312; U.S. 5,216,052; U.S. 5,252,643; DE-A-43 16 611; DE-A-43 16 622; DE-A-43 16 876; EP-A-0 589 839 oder EP-A-0 591 102 offenbart sind, oder 3-[4-(2-Acetoxyethoxy)phenyl]-5,7-di-tert-butyl-benzofuran-2-on, 5,7-Di-tert-butyl-3-[4-(2-stearoyloxyethoxy)phenyl]benzo-furan-2-on, 3,3'-Bis[5,7-di-tert-butyl-3-(4-[2-hydroxyethoxy]phehyl)benioforan-2-on], 5,7-Di-tert-butyl-3-(4-ethoxyphenyl)benzofuran-2-on, 3-(4-Acetoxy-3,5-dimethylphenyl)-5,7-di-tert-butylbenzofuran-2-on, . 3-(3,5-Dimethyl-4-pivaloyloxyphenyl)-5,7-di-tert-butyl-benzo-furan-2-on, 3-(3,4-Dimethylphenyl)-5,7-di-tert-butylbenzofuran-2-on, 3-(2,3-Dimethylphenyl)-5,7-di-tert-butylbenzofuran-2-on, Lacton-Antioxidantien wie

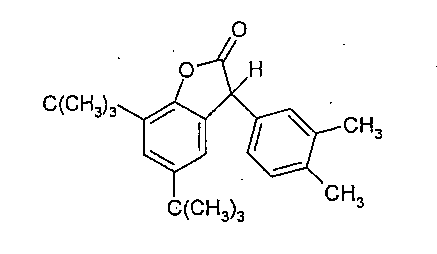

Diese Verbindungen wirken beispielsweise als Antioxidantien. Es können einzelne dieser Verbindungen oder Gemische derselben eingesetzt werden.
1.9. Für die Durchführung des Verfahrens bevorzugt geeignete fluoreszierende Weichmacher sind die in "Plastics Handbook", Hrsg. R. Gächter und H. Müller, Hanser Verlag, 3. Aufl., 1990, Seite 775-789 aufgeführten.
1.10. Für die Durchführung des Verfahrens bevorzugt geeignete Formtrennmittel sind Ester von aliphatischen Säuren und Alkoholen, z.B. Pentaerythrittetrastearat und Glycerinmonostearat, sie werden allein oder im Gemisch vorzugsweise in einer Menge von 0,02 bis 1 Gew.-%, bezogen auf die Masse der Zusammensetzung eingesetzt.
1.11. Für die Durchführung des Verfahrens bevorzugt geeignete flammhemmende Additive sind Phosphatester, d.h. Triphenylphosphat, Resorcindiphosphorsäureester, bromhaltige Verbindungen, wie bromierte Phosphorsäureester, bromierte Oligocarbonate und Polycarbonate, sowie Salze, wie C₄F₉SO₃⁻Na⁺.
1.12. Für die Durchführung des Verfahrens bevorzugt geeignete antistatische Mittel sind Sulfonatsalze beispielsweise Tetraethylammoniumsalze von C₁₂H₂₅SO³⁻ oder C₈F₁₇SO³⁻.
1.13. Für die Durchführung des Verfahrens bevorzugt geeignete Färbemittel sind Pigmente sowie organische und anorganische Farbstoffe.
1.14. Verbindungen, die Epoxygruppen enthalten, wie 3,4 Epoxycyclohexylmethyl-3,4-epoxy-cyclohexylcarboxylat, Copolymere von Glycidylmethacrylat und Epoxysilane.
1.15. Verbindungen, die Anhydridgruppen, wie Maleinsäureanhydrid, Bernsteinsäureanhydrid, Benzoesäureanhydrid und Phthalsäureanhydrid.

Die Verbindungen der Gruppen 1.14 und 1.15 wirken als Schmelzestabilisatoren. Sie können einzeln oder in Gemischen eingesetzt werden.

Thermoplastische, aromatische Polycarbonate im Sinne der vorliegenden Erfindung sind sowohl Homopolycarbonate als auch Copolycarbonate; die Polycarbonate können in bekannter Weise linear oder verzweigt sein.

Ein Teil, bis zu 80 Mol-%, vorzugsweise von 20 Mol-% bis zu 50 Mol-% der Carbonat-Gruppen in den erfindungsgemäß geeigneten Polycarbonaten können durch aromatische DicarbonsäureesterGruppen ersetzt sein. Derartige Polycarbonate, die sowohl Säurereste der Kohlensäure als auch Säurereste von aromatischen Dicarbonsäuren in die Molekülkette eingebaut enthalten, sind, genau bezeichnet, aromatische Polyestercarbonate. Sie sollen der Einfachheit halber in vorliegender Anmeldung unter dem Oberbegriff der thermoplastischen, aromatischen.Polycarbonate subsumiert werden.

Die Herstellung der im erfindungsgemäßen Verfahren zu verwendenden Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Einzelheiten der Herstellung von Polycarbonaten sind in Hunderten von Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964;
- D.C. Prevorsek, B.T. Debona und Y. Kesten, Corporate Research Center, Allied Chemical Corporation, Morristown, New Jersey 07960: "Synthesis of Poly(ester Carbonate) Copolymers" in Journal of Polymer Science, Polymer Chemistry Edition, Vol. 19, 75-90 (1980)";
- D. Freitag, U. Grigo, P.R. Müller, N. Nouvertne', BAYER AG, "Polycarbonates" in Encyclopedia of Polymer Science and Engineering, Volume 1 1, Second Edition, 1988, Seiten 648-718 und schließlich
Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Die thermoplastischen Polycarbonate, die in dem Verfahren bevorzugt eingesetzt werden, einschließlich der thermoplastischen, aromatischen Polyestercarbonate haben ein mittleres Molekulargewicht M_{w} (ermittelt durch Messung der relativen Viskosität bei 25°C in CH₂Cl₂ und einer Konzentration von 0,5 g pro 100 ml CH₂Cl₂) von 12 000 bis 120 000, vorzugsweise von 15 000 bis 80 000 und insbesondere von 15 000 bis 60 000.

Für die Herstellung der Polycarbonate geeignete Diphenole sind beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, (α,α'- Bis-(hydroxyphenyl)-diisopropylbenzole, sowie deren kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxyphenyl)-2-methylbutan, 1,1-Bis-(4-hydroxyphenyl)-m/p diisopropylbenzol, 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1, 1-Bis-(3,5-dimethyl-4-hydroxyphenyl)-m/p-diisopropyl-benzol, 2,2- und 1, 1-Bis-(4-hydroxyphenyl)-3,3,5-trimethylcyclohexan.

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2.2-Bis(3,5-dimethyl-4-hydroxyphenyl)-propan, 1,1-Bis-(4-hydroxyphenyl)-cyclohexan, 1,1-Bis-(4-hydroxyphenyl)-m/p diisopropylbenzol und 1,1-Bis-(4-hydroxyphenyl)-3,3,5-trimethylcyclohexan.

Diese und weitere geeignete Diphenole sind z.B. in den Patentschriften: US-A-3 028 635, US-A-2 999 835, US-A-3 148 172, US-A-2 991 273, US-A-3 271 367, US-A-4 982 014 und US-A-2 999 846, in den deutschen Offenlegungsschriften DE-A-1 570 703, DE-A-2 063 050, DE-A-2 036 052, DE-A-2 211 956 und DE-A-3 832 396, der französischen Patentschrift FR1 561 518, in der Monographie "H. Schnell, Chemistry and Physics of Polycarbonates, Interscience Publishers, New York 1964" sowie in den japanischen Offenlegungsschriften 62039/1986, 62040/1986 und 105550/1986 beschrieben.

Im Falle der Homopolycarbonate wird nur ein Diphenol eingesetzt, im Falle der Copolycarbonate werden mehrere Diphenole eingesetzt, wobei selbstverständlich die verwendeten Bisphenole, wie auch alle anderen der Synthese zugesetzten Chemikalien und Hilfsstoffe mit den aus ihrer eigenen Synthese stammenden Verunreinigungen kontaminiert sein können, obwohl es wünschenswert ist, mit möglichst sauberen Rohstoffen zu arbeiten.

Geeignete Kettenabbrecher sind sowohl Monophenole als auch Monocarbonsäuren. Geeignete Monophenole sind Phenol, Alkylphenole wie Kresole, p-tert.Butylphenol, p-n-Octylphenol, p-isoOctylphenol, p-n-Nonylphenol und p-iso-Nonylphenol, Halogenphenole wie p-Chlorphenol, 2,4-Dichlorphenol, p-Bromphenol und 2,4,6-Tribromphenol, bzw. deren Mischungen.

Geeignete Monocarbonsäuren sind Benzoesäure, Alkylbenzoesäuren und Halogenbenzoesäuren.

Bevorzugte Kettenabbrecher sind die Phenole der Formel (I)

R⁶-Ph-OH (I)

worin R⁶ für H oder einen verzweigten oder unverzweigten C₁- C₁₈-Alkylrest steht.

Die Menge an eingesetztem Kettenabbrecher beträgt 0,5 Mol-% bis 10 Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2,4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)phenyl)-orthoterephthalsäureester, Tetra-(4-hydroxyphenyl)-methan, Tetra-(4-(4-hydroxy-phenyl-isopropyl)-phenoxy)-methan und 1,4-Bis(4',4"-dihydroxy-triphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls eingesetzten Verzweiger beträgt 0,05 Mol-% bis 2,5 Mol-%, bezogen wiederum auf Mole an jeweils eingesetzten Diphenolen.

Die Verzweiger können entweder mit den Diphenolen und den Kettenabbrechern in der wässrig alkalischen Phase vorgelegt werden, oder in einem organischen Lösungsmittel gelöst vor der Phosgenierung zugegeben werden.

Alle diese Maßnahmen zur Herstellung der Polycarbonate sind dem Fachmann grundsätzlich geläufig.

Für die Herstellung der Polyestercarbonate geeignete aromatische Dicarbonsäuren sind beispielsweise Phthalsäure, Terephthalsäure, Isophthalsäure, tert.-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate, sind das bekannte Grenzflächenverfahren und das bekannte Schmelzumesterungsverfahren.

Im ersten Fall dient als Kohlensäurederivat vorzugsweise Phosgen, im letzteren Fall vorzugsweise Diphenylcarbonat. Katalysatoren, Lösungsmittel, Aufarbeitung, Reaktionsbedingungen etc. für die Polycarbonatherstellung sind in beiden Fällen hinreichend beschrieben und bekannt.

Die erfindungsgemäßen Polycarbonatformmassen können auf den üblichen Verarbeitungsmaschinen nach bekannten Methoden unter den für Polycarbonat üblichen Verarbeitungsparametern zu Formkörpem verarbeitet werden.

Ein schmelzeförmiger Hauptstrom kann bei der Primärproduktion von Polycarbonat aus verschiedenen Verfahren anfallen. Die folgenden Fälle 3.1 und 3.2 sind als Beispiele zu verstehen, die die Breite der Erfindung darstellen, jedoch nicht einschränken sollen.
3.1. DE 100 05 151 A1 beschreibt ein mehrstufiges Verfahren zur Herstellung von hochreinem Polycarbonat nach dem Phasengrenzflächenverfahren. Darin wird die gewaschene und filtrierte Lösung mit einem Polymeranteil von 5 bis 20 Gewichts-% in einem oder mehreren Schritten, in denen jeweils Rohrbündelwärmetauscher mit nachgeschaltetem Abscheider, Dünnschichtverdampfer oder Schlangenrohrverdampfer mit nachgeschaltetem Abscheider oder eine Kombination von Rohrbündelwärmetauscher und Schlangenrohrverdampfer mit nachgeschaltetem Abscheider eingesetzt werden können, auf eine Konzentration von 60 bis 75 Gewichts-%, wobei der Druck in der letzten Stufe zwischen 0,1 MPa und 0,4 MPa beträgt. In einer weiteren Stufe wird die Lösung einem Rohrbündelwärmetauscher mit nachgeschaltetem Abscheider zugeführt, der bei einer Temperatur von 250 bis 350°C die Lösung auf mindestens 95 Gewichts-%, insbesondere auf 98 bis 99.5 Gewichts-% aufkonzentriert. In einer weiteren Stufe wird die Reste von Lösungsmittel und/oder anderen flüchtigen Komponenten enthaltende Lösung in einem weiteren Rohrbündelwärmetauscher oder einem Strangverdampfer bei einer Temperatur von 250 bis 350°C auf einen Gehalt an Lösungsmittel von 5 bis 500 ppm aufkonzentriert. Der erfindungsgemäße Hauptstrom ist hier nach dem Austrag der letzten Stufe gegeben.
3.2. DE 101 198 51 beschreibt ein Verfahren zur kontinuierlichen Herstellung von Polycarbonaten aus Oligocarbonaten nach dem Umesterungsverfahren unter Abdampfung von Monophenolen in einem Reaktor, der die ständige Bildung freier Filme bei Filmbildungsraten größer als 10 ermöglicht. Der Reaktor ist hierbei als liegender Zylinder, in denen sich Lochscheiben auf einer Hohlwelle drehen, ausgeführt. Die Filmbildungsrate ist hierbei definiert als das Verhältnis aus der Menge desjenigen Materials, das von der rotierenden Scheibe hochgezogen und in Form eines freien Filmes wieder nach unten abfließt, zur Gesamtmenge des Durchsatzes des Reaktors. Der erfindungsgemäße Hauptstrom ist hier nach dem Austrag aus diesem Reaktor gegeben.

Überraschenderweise wurde festgestellt, dass schmelzeförmiges Polycarbonat bei den hohen Temperaturen, die im Statikmischer herrschen und der im Statikmischer erforderlichen Verweilzeit mit Additiven gemischt werden kann und hierbei ein Produkt von hervorragender Farbe und sehr guten Eigenschaften entsteht. Die Temperaturen des Hauptstroms liegen dabei unter 320°C, bevorzugt unter 310°C und besonders bevorzugt unter 300°C. Die Verweilzeiten im diesem Statikmischer (im weiteren als Haupt-Statikmischer bezeichnet) betragen dabei zwischen 10 und 600 Sekunden, bevorzugt zwischen 20 und 120 Sekunden und besonders bevorzugt zwischen 30 und 60 Sekunden.

Den Granulaten können auch Additive in fester Form oder in Form einer Vormischung mit Polymer (sogenannte Masterbatches) beigemischt werden. Weiterhin ist die Zumischung von flüssigen Additiven in das Aufschmelzorgan möglich. In beiden Fällen kann in dem Aufschmelzorgan eine Vorvermischung der Additive mit dem Polymerstrom vorgenommen werden. Der so gewonnene Polymerstrom wird in einem Statikmischer (im weiteren als Seiten-Statikmischer bezeichnet) mit einer Verweilzeit zwischen 10 und 300, bevorzugt zwischen 20 und 180 und besonders bevorzugt zwischen 30 und 120 Sekunden mit weiteren, flüssigen Additiven gemischt und in den Hauptstrom gebracht, mit dem er wiederum mit Hilfe eines Statikmischers gemischt wird. Besonders günstig für die Produktqualität ist es, wenn die Temperatur des Seitenstroms unter der des Hauptstroms liegt, da hierbei die gesamte Verweilzeit der Additive bei der hohen Temperatur des Hauptstromes kleiner ist als bei direkter Dosierung vor den Hauptstatikmischer. Überraschend wurde gefunden, dass unter diesen Bedingungen auch bei Einsatz von Sekundaware die Qualität des Hauptstromes innerhalb der Spezifikationen blieb. Bevorzugt ist ein Verhältnis von Seiten- zu Hauptstrom zwischen 1:4 und 1:30, besonders bevorzugt zwischen 1:5 und 1:20.

Das Aufschmelzaggregat kann von einem Fachmann nach dem Stand der Technik ausgelegt werden und kann beispielsweise ein Einwellenextruder, ein gleichsinnig oder gegensinnig drehender Zweiwellenxtruder, ein gleichsinnig drehender Vielwellenextruder oder ein Ko-Kneter sein. Bevorzugt wird ein gleichsinnig drehender Zweiwellenextruder eingesetzt. Nach dem Aufschmelzorgan kann eine Einheit zur Druckerhöhung, bevorzugt eine Zahnradpumpe, eingesetzt werden.

Die verwendeten Statikmischer können ebenfalls von einem Fachmann dem Stand der Technik entsprechend ausgelegt werden. Bevorzugt können Statikmischer vom Typ SMX (siehe US 4 062 524)sowie nach DE 100 31 766 A1 oder US 6 394 644 B1 verwendet werden.

Die Erfindung wird nachstehend anhand von Fig. 1, die ein schematische Anordnung des Verfahrensaufbaus wiedergibt, beispielhaft näher erläutert.

### Beispiele

### Beispiel 1

Figur 1 zeigt in Form eines Verfahrensschemas ein Beispiel für die vorliegende Erfindung. 300 kg/h eines Granulats aus Polycarbonat 1, dem 1,4 kg/h Entformungsmittel in fester Form beigemischt werden, werden dem Einfülltrichter 2 eines gleichsinnig drehenden, dicht kämmenden, zweiwelligen Aufschmelzextruders 3 zugeführt. Eine Zahnradpumpe 5. erhöht den Druck der Schmelze auf 98 bar. Nach der Zahnradpumpe beträgt die Temperatur der Schmelze 275°C. Eine Hochdruck-Kolbenpumpe 6 führt 850 g/h eines flüssigen Thermostabilisators zu. Additive 11 und Schmelze 12 werden in einem Statikmischer 7 mit einer Verweilzeit von 120 Sekunden zu einem Seitenstrom 13 vorgemischt. Aus einem Prozess zur Herstellung von Polycarbonat durch Umesterung nach DE-A-10 119 851 wird ein Produktstrom 8 von 5,5 t/h mit einer relativen Viskosität von 1,20 mit einer Temperatur von 280°C mit einer Zahnradpumpe 9 ausgetragen. In einem Statikmischer 10 mit 40 Sekunden Verweilzeit werden Seiten- und Hauptstrom miteinander vermischt. Das Produkt wird danach granuliert. Der Yellowness-Index (YI) der Mischung ist 1,2 und die Transmission 90 %.

### Beispiel 2

Ein Strom von 290 kg/h Sekundaware aus Polycarbonat 1, der 60 kg Masterbatch für zwei verschiedene Färbemittel sowie ein Thermostabilisator in fester Form beigemischt werden, werden dem Einfülltrichter 2 eines gleichsinnig drehenden, dicht kämmenden, zweiwelligen Aufschmelzextruders 3 zugeführt. Der Zulauf 4 zeigt eine weitere Möglichkeit zum Zudosieren von flüssigen Additiven. Eine Zahnradpumpe 5 erhöht den Druck der Schmelze auf 160 bar. Nach der Zahnradpumpe beträgt die Temperatur der Schmelze 305°C. Eine Hochdruck-Kolbenpumpe 6 führt 1,7 kg/h eines weiteren Thermostabilisators in flüssiger Form zu. Additive 11 und Polymer 12 werden in einem Statikmischer mit einer Verweilzeit von 120 Sekunden vorgemischt zum Seitenstrom 13. Aus einem Prozess zur Herstellung von Polycarbonat durch Umesterung nach DE 10 119 851 wird ein Produktstrom 8 von Polycarbonat von 5,5 t/h und einer relativen Viskosität von 1,32 bei einer Temperatur von 300°C mit einer Austrags-Zahnradpumpe 9 ausgetragen. In einem Statikmischer 10 mit 40 Sekunden Verweilzeit werden Seiten- und Hauptstrom miteinander vermischt. Das Produkt wird danach granuliert. Das Ergebnis ist ein blau eingefärbtes Polycarbonat mit hervorragender Gleichmäßigkeit der Farbeinmischung und einer Transmission von 87,1 %.

Die relative Viskosität wird als Quotient aus der Viskosität des Lösungsmittels und der Viskosität des in diesem Lösungsmittel gelösten Polymers dargestellt. Sie wurden in Dichlormethan bei einer Konzentration von 5 g/l bei 25°C ermittelt.

Der Yellowness-Index YI wurde nach **ASTM E 313** an spritzgegossenen Proben einer Dicke von 4 mm bestimmt. Die Verspritzungstemperatur war 300°C. Die Transparenz wurde durch Absorptionsmessung im sichtbaren Licht an der gleichen Probe gemessen.

### Beispiel 3

Es wurde ähnlich Beispiel 2 verfahren, jedoch wurde der statische Mischer 10 durch eine Kombination aus einem ersten statischen Mischer 10, der eine Mischereinheit aus 12 Mischerscheiben gemäß EP-A 947 239, Fig. 5c mit einem Durchmesser von ca. 46 mm und 14 rechteckigen Produktdurchgängen ist, einem nachfolgenden Mischrohr 15 mit auf 175 mm erweitertem Querschnitt und einer anschließenden statischen Mischereinheit 16 mit feinerer Maschenweite. Diese Mischereinheit war entsprechend EP-A 947 239 gestaltet und wies 38 Scheiben von 10 mm Stärke mit je 48 Öffnungen bei einem Durchmesser von 175 mm auf.

Hiermit konnten 1 t Polycarbonat im Hauptstrom vollständig mit dem Additivseitenstrom bei erheblich verkürzter Mischstrecke vermischt werden.

## Patentansprüche

1. Kontinuierliches Verfahren zum Mischen von hochviskosen Polymerschmelzen als Hauptstrom in einem Strömungsrohr mit Additiven aus einem flüssigen Seitenstrom, **dadurch gekennzeichnet, dass** die Additive (11) mit einem Teil der Polymerschmelze (12) zu dem Seitenstrom vorvermischt werden, dass der additivhaltige Seitenstrom (13) über eine insbesondere zentral im Strömungsrohr angeordnete Zuleitung (14) in den Hauptstrom (8) eingespeist wird, die vereinigten Ströme in einem direkt nachgeschalteten ersten statischen Mischer (10) intensiv vermischt werden und diese Vormischung in einem Mischrohr (15) mit vergrößertem Querschnitt und einem zweiten statischen Mischer (16) mit feinerer Struktur (Maschenweite) feinverteilt wird.

2. Verfahren nach Anspruch 1, **dadurch gekennzeichnet, dass** die Polymerschmelze Polycarbonat ist.

3. Verfahren nach Anspruch 1 und 2, **dadurch gekennzeichnet, dass** der Querschnitt des Mischrohrs des zweiten Statikmischers um mindestens das 1,2fache größer ist als der Querschnitt des Mischrohrs des ersten Statikmischers.

4. Verfahren nach Anspruch 1 bis 3, **dadurch gekennzeichnet, dass** die Zahl der Produktdurchgangsöffnungen (pro Flächeneinheit) im zweiten statischen Mischer mindestens das 1,5fache der Zahl der Durchgangsöffnungen (pro Flächeneinheit) im ersten statischen Mischer beträgt.

5. Verfahren nach einem der Ansprüche 1 bis 4, **dadurch gekennzeichnet, dass** die Mischung eine Viskosität im Bereich von 1 Pa*s bis 10⁷ Pa*s aufweist.

6. Verfahren nach Anspruch 1 bis 5, **dadurch gekennzeichnet, dass** die Temperatur des Hauptstromes (8) vor der Vermischung kleiner als 320°C ist, und dass die Polymerschmelze Polycarbonat ist.

7. Verfahren nach einem der vorhergehenden Ansprüche, **dadurch gekennzeichnet, dass** die Verweilzeit des Hauptstromes (8) im Statikmischer (10; 16) 20 bis 120 Sekunden beträgt, und dass die Polymerschmelze Polycarbonat ist.

8. Verfahren nach Anspruch 1, **dadurch gekennzeichnet, dass** das Masseverhältnis des Seitenstroms (13) zum Hauptstrom (8) 1:4 bis 1:30 beträgt.

9. Verfahren nach Anspruch 1, **dadurch gekennzeichnet, dass** der Seitenstrom (13) auf auf geschmolzenem Polycarbonatgranulat und/oder Polycarbonatbruchware insbesondere aus Polycarbonat-Recyclingmaterial basiert.

10. Verfahren nach Anspruch 9, **dadurch gekennzeichnet, dass** ein Teil der Additive oder alle Additive nach dem Aufschmelzen des Polycarbonats für den Seitenstrom zugeführt und mit einem weiteren Statikmischer (7) zur Bildung des Seitenstroms (13) eingemischt werden.

11. Verfahren nach Anspruch 10, **dadurch gekennzeichnet, dass** die Verweilzeit im weiteren Statikmischer (7) des Seitenstroms (13) 10 bis 300 Sekunden beträgt.

## Claims

1. Continuous process for mixing highly viscous polymer melts as main stream in a flow tube with additives from a liquid side stream, **characterised in that** the additives (11) are premixed with part of the polymer melt (12) in the side stream, that the additive-containing side stream (13) is fed into the main stream (8) through a feed line (14) arranged in particular centrally in the flow tube, the combined streams are intensively mixed in a first static mixer (10) directly connected downstream, and this premixture is finely divided in a mixing tube (15) of enlarged cross-section and in a second static mixer (16) of finer structure (mesh width).

2. Process according to claim 1, **characterised in that** the polymer melt is polycarbonate.

3. Process according to claims 1 and 2, **characterised in that** the cross-section of the mixing tube of the second static mixer is larger by a factor of at least 1.2 than the cross-section of the mixing tube of the first static mixer.

4. Process according to claims 1 to 3, **characterised in that** the number of product throughput openings (per unit surface area) in the second static mixer is at least 1.5 times the number of throughput openings (per unit surface area) in the first static mixer.

5. Process according to one of claims 1 to 4, **characterised in that** the mixture has a viscosity in the range from 1 Pa x s to 10⁷ Pa x s.

6. Process according to claims 1 to 5, **characterised in that** the temperature of the main stream (8) upstream of the mixing is less than 320°C, and that the polymer melt is polycarbonate.

7. Process according to one of the preceding claims, **characterised in that** the residence time of the main stream (8) in the static mixer (10; 16) is 20 to 120 seconds, and that the polymer melt is polycarbonate.

8. Process according to claim 1, **characterised in that** the mass ratio of the side stream (13) to the main stream (8) is 1:4 to 1:30.

9. Process according to claim 1, **characterised in that** the side stream (13) is based on molten polycarbonate granular material and/or fragmented polycarbonate material, in particular polycarbonate recycling material.

10. Process according to claim 9, **characterised in that** part of the additives or all the additives are fed in after melting the polycarbonate for the side stream, and are mixed in using a further static mixer (7) to form the side stream (13).

11. Process according to claim 10, **characterised in that** the residence time in the further static mixer (7) of the side stream (13) is 10 to 300 seconds.

## Revendications

1. Procédé continu de mélange de masses fondues de polymère de haute viscosité comme flux principal dans un tuyau d'écoulement avec des additifs provenant d'un flux latéral liquide, **caractérisé en ce que** les additifs (11) sont prémélangés avec une partie de la masse fondue de polymère (12) vers le flux latéral, le flux latéral d'additif (13) est introduit dans le flux principal (8) via une tuyauterie d'alimentation (14) disposée en particulier de manière centrale dans le tuyau d'écoulement, les flux réunis sont mélangés intensément dans un premier mélangeur statique (10) branché directement en aval et ce prémélange est finement réparti dans un tuyau de mélange (15) de section agrandie et un deuxième mélangeur statique (16) de structure (ouverture de maille) plus fine.

2. Procédé suivant la revendication 1, **caractérisé en ce que** la masse fondue de polymère est du polycarbonate.

3. Procédé suivant les revendications 1 et 2, **caractérisé en ce que** la section du tuyau de mélange du deuxième mélangeur statique est au moins 1,2 fois plus grande que la section du tuyau de mélange du premier mélangeur statique.

4. Procédé suivant la revendication 1 à 3, **caractérisé en ce que** le nombre des ouvertures de passage de produit (par unité de surface) dans le deuxième mélangeur statique est au moins 1,5 fois le nombre des ouvertures de passage de produit (par unité de surface) dans le premier mélangeur statique.

5. Procédé suivant l'une des revendications 1 à 4, **caractérisé en ce que** le mélange présente une viscosité de l'ordre de 1 Pa-s à 10⁷ Pa·s.

6. Procédé suivant les revendications 1 à 5, **caractérisé en ce que** la température du flux principal (B) avant le mélange est inférieure à 320°C et **en ce que** la masse fondue de polymère est du polycarbonate.

7. Procédé suivant l'une des revendications précédentes, **caractérisé en ce que** le temps de séjour du flux principal (8) dans le mélangeur statique (10; 16) est de 20 à 120 secondes et **en ce que** la masse fondue de polymère est du polycarbonate.

8. Procédé suivant la revendication 1, **caractérisé en ce que** le rapport de masse du flux latéral (13) sur le flux principal (8) est de 1:4 à 1:30.

9. Procédé suivant la revendication 1, **caractérisé en ce que** le flux latéral (13) est à base de granulés de polycarbonate fondus et/ou de déchets de polycarbonate, en particulier de matériau de recyclage à base de polycarbonate.

10. Procédé suivant la revendication 9, **caractérisé en ce qu'**une partie des additifs ou tous les additifs sont ajoutés après la fusion du polycarbonate pour le flux latéral et sont mélangés avec un mélangeur statique (7) supplémentaire pour la formation du flux latéral (13).

11. Procédé suivant la revendication 10, **caractérisé en ce que** le temps de séjour dans le mélangeur statique (7) supplémentaire du flux latéral (13) est de 10 à 300 secondes.
